(19) Europäisches Patentamt
European Patent Office
Office européen des brevets

(11) **EP 1 382 955 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(51) Int Cl.:
*G01M 15/00* $^{(2006.01)}$      *G01M 17/007* $^{(2006.01)}$

(21) Anmeldenummer: **03450169.2**

(22) Anmeldetag: **10.07.2003**

(54) **Verfahren zur Simulation des Fahrverhaltens von Fahrzeugen**

Procedure and device for simulating the driving performance of vehicles

Procédé et dispositif pour la simulation du comportement routier de vehicules

(84) Benannte Vertragsstaaten:
**AT BE BG CH CY CZ DE DK EE ES FI FR GB GR HU IE IT LI LU MC NL PT RO SE SI SK TR**

(30) Priorität: **19.07.2002 AT 11042002**

(43) Veröffentlichungstag der Anmeldung:
**21.01.2004 Patentblatt 2004/04**

(73) Patentinhaber: **AVL List GmbH**
**8020 Graz (AT)**

(72) Erfinder: **Schöggl, Peter, Dip.-Ing. Dr.**
**8054 Seiersberg (AT)**

(74) Vertreter: **Babeluk, Michael**
**Patentanwalt**
**Mariahilfer Gürtel 39/17**
**1150 Wien (AT)**

(56) Entgegenhaltungen:
**EP-A- 1 037 030     EP-A- 1 048 944**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zur Simulation des Fahrverhaltens von Fahrzeugen gemäß dem Oberbegriff von Patentanspruch 1.

Das Verhalten von Kraftfahrzeugen kann auf Prüfständen simuliert werden. Üblicherweise wird dabei eine Brennkraftmaschine mit innerer Verbrennung, die identisch mit der im Fahrzeug befindlichen Brennkraftmaschine ist, auf einem dynamischen Prüfstand an eine elektrische Bremsvorrichtung angekoppelt. Aufgrund verschiedener Simulationsmodelle, die in der Folge beschrieben werden, wird ein Bremsmoment ermittelt, das an der elektrischen Bremse eingestellt wird und die Brennkraftmaschine dementsprechend belastet. In systematischer Hinsicht kann man dabei folgende Simulationsmodelle unterscheiden:

- Das Antriebsstrang-Modell $MOD_D$, das die Massen, Elastizitäten und Dämpfungen des Antriebsstranges sowie die Übersetzung des Schaltgetriebes abbildet.

- In einem Fahrzeugmodell $MOD_V$ wird im Wesentlichen der Luftwiderstand und der Rollwiderstand des Fahrzeugs in Abhängigkeit von der Fahrzeuggeschwindigkeit und dem an den Antriebsrädern auftretenden Schlupf berücksichtigt, sowie die Masse des Fahrzeugs abgebildet.

- In einem Rad-Modell $MOD_W$ wird der auftretende Schlupf in Abhängigkeit von der Fahrzeuggeschwindigkeit und dem an den Antriebsrädern anliegenden Moment ermittelt.

Die oben beschriebenen Teilmodelle können selbstverständlich Teile eines integrierten Gesamtmodells sein, für die folgende Darstellung werden diese einzelnen Teilmodelle zur besseren Übersichtlichkeit getrennt voneinander behandelt.

Es ist bekannt, einen Prüfstand nach einem vereinfachten Modell zu betreiben, bei dem der Schlupf vernachlässigt wird. Selbstverständlich können durch ein solches Modell Effekte, die wesentlich vom Schlupf abhängen, nicht abgebildet werden. Um die daraus resultierenden Fehler zu minimieren, wird in dem Modell üblicherweise eine geringfügige Veränderung des Luftwiderstands oder des Rollwiderstands des Fahrzeugs vorgenommen, um zu erreichen, dass das Verhalten des am Prüfstand simulierten Fahrzeugs dem Verhalten des realen Fahrzeugs weitgehend entspricht.

Gemäß einem erweiterten Modell nach dem Stand der Technik wird der berechnete Schlupf zur Bestimmung der Fahrzeuggeschwindigkeit in rechnerisch richtiger Weise eingesetzt. Damit ist in stationären oder annähernd stationären Fahrzeugzuständen eine sehr gute Abbildung des Fahrzeugs am Prüfstand möglich. In Zusammenhang mit Schlupfregelungssystemen treten jedoch die oben beschriebenen Nachteile, auf, die darin bestehen, dass die durch die Schlupfregelung bedingten Schwingungen nicht adäquat abgebildet werden können.

Ein solches Modell ist in der EP 1 048 944 A gezeigt.

Die Motorsteuerung eines Fahrzeugs kann auf verschiedene Weise erfolgen. In einer ersten Variante, einem fahrbestimmten System, wird die Motorsteuerung primär vom Fahrer durchgeführt, d.h., dass der Fahrer die Stellung der Drosselklappe oder einen anderen wesentlichen Parameter weitgehend direkt beeinflusst. Das Motorfahrzeugsystem stellt dabei eine offene Regelstrecke dar, d.h., dass das Fahrzeugverhalten lediglich über die Drehzahl an der Kurbelwelle auf den Motor zurückwirkt, jedoch keine sonstigen Rückwirkungen vorgesehen sind.

In einer anderen Betriebsweise wird jedoch die Motorsteuerung nicht nur vom Wunsch des Fahrers entsprechend der Gaspedalstellung beeinflusst, sondern auch von Größen, die vom Verhalten des Fahrzeugs selbst abhängen. Beispiele für solche Motorsteuerungen sind Tempomaten und Schlupfregelungssysteme. Bei einem Schlupfregelungssystem wird der an den Antriebsrädern vorliegende Schlupf aus der Drehzahldifferenz der angetriebenen Räder zu den nicht angetriebenen Rädern bestimmt, und in Anhängigkeit von diesem Schlupf wird in die Motorsteuerung eingegriffen. Dies kann beispielsweise durch eine Veränderung der Drosselklappenstellung eine Veränderung der Einspritzmenge, des Einspritzzeitpunktes oder durch temporäre Zylinderabschaltung erfolgen. Auf diese Weise ist es beispielsweise im Rennsport möglich, den Schlupf in einem optimalen Bereich zu halten, der eine maximale Vortriebskraft oder in Kurven eine optimale Seitenführungskraft der Antriebsräder gewährleistet.

Charakteristisch ist bei der Verwendung von Schlupfregelungsprogrammen, dass bei Ansprechen der Schlupfregelung Schwingungen im Antriebsstrang auftreten, die durch die Regelalgorithmen des Schlupfregelungsprogramms bedingt sind. Diese Schwingungen weisen eine Frequenz von beispielsweise 20 Hertz auf.

Es hat sich nun herausgestellt, dass auch bei hochdynamischen Prüfständen und bei Verwendung korrekter Modelle für den Antriebsstrang, das Fahrzeug und die Räder diese Schwingungen nicht in einer Weise abgebildet werden können, die dem Verhalten des realen Fahrzeugs entspricht. Grund dafür ist die Tatsache, dass das Trägheitsmoment der elektrischen Bremsvorrichtung am Prüfstand wesentlich größer ist als das Trägheitsmoment der Antriebsräder und des Antriebsstranges. Bei einem Prüfstand für Rennmotoren bewegt sich das Trägheitsmoment der elektrischen Bremsvorrichtung typischerweise in einer Größenordnung, die ein Mehrfaches des Trägheitsmoments eines Antriebsrades beträgt. Aufgrund dieser größeren Trägheit am Prüfstand können die Schwingungen, die durch die Schlupfregelung verursacht werden, nicht entsprechend abgebildet werden, und es kann damit kein realistisches Bild über das Verhalten des Fahrzeugs in diesem Betriebszustand gewonnen werden.

Aber auch bei der Simulation von Serienfahrzeugen, bei denen eine Schlupfregelung im Allgemeinen nur in außergewöhnlichen Fahrsituationen eingreift, treten häufig Effekte auf, die mit einer Simulation, die auf die herkömmliche Art durchgeführt wird, nicht oder nur unzureichend abgebildet werden können, wie etwa Schläge im Antriebsstrang oder dergleichen.

Aufgrund der mechanischen Belastungen am Prüfstand ist es auch nicht ohne besondere Maßnahmen möglich, das Trägheitsmoment der elektrischen Bremse so weit zu verringern, dass eine Übereinstimmung mit dem realen Fahrzeug hergestellt werden kann.

Aufgabe der vorliegenden Erfindung ist es, diese Nachteile zu vermeiden und ein Verfahren und eine Vorrichtung anzugeben, mit der das Verhalten eines Fahrzeugs auch bei Vorliegen einer Schlupfregelung oder einem ähnlichen Programm in einer Weise simuliert werden kann, die der Realität weitgehend entspricht.

Erfindungsgemäß ist gemäß Patentanspruch 1 vorgesehen, dass das Simulationsmodell zwei unterschiedliche Fahrzeuggeschwindigkeiten berechnet, nämlich eine erste Fahrzeuggeschwindigkeit unter korrekter Berücksichtigung des Schlupfes und eine virtuelle Fahrzeuggeschwindigkeit, die um einen vom Schlupf abhängigen Korrekturwert gegenüber der ersten Fahrzeuggeschwindigkeit verändert ist und dass die eine Schlupfregelung umfassende Motorsteuerung mit der ersten Fahrzeuggeschwindigkeit angesteuert wird, während zur Steuerung der Bremsvorrichtung die virtuelle Fahrzeuggeschwindigkeit herangezogen wird.

Der Schlupf wird dabei als Verhältnis des Geschwindigkeitsunterschiedes des Reifenumfangs zur Fahrzeuggeschwindigkeit $v_v$ und der Geschwindigkeit $v_w$ des Reifenumfangs gemäß Formel (1) bezeichnet.

$$\dot{S} = (v_w - v_v)/v_w \tag{1}$$

Die Geschwindigkeit $V_w$ des Reifenumfangs ergibt sich gemäß Formel (2) aus dem Produkt des Reifenumfangs $V_w$ und der Drehzahl $U_w$ des Rades.

$$v_w = n_w \cdot U_w \tag{2}$$

Es wird nun eine virtuelle Fahrzeuggeschwindigkeit aus der nach dem herkömmlichen Modell berechneten Fahrzeuggeschwindigkeit bestimmt, indem diese um einen Faktor k korrigiert wird, der eine Funktion des Schlupfs ist.

Der Schlupf kann dabei aus der Differenz der Drehzahl der angetriebenen Räder zu den nicht angetriebenen Rädern bestimmt werden, oder aus der Differenz der Drehzahl des Motors, die mit den entsprechenden Übersetzungsverhältnissen im Antriebsstrang multipliziert ist zu der Drehzahl der nicht angetriebenen Räder. Die obigen Raddrehzahlen sind natürlich Rechenwerte, die sich aus dem Simulationsmodell ergeben.

Wesentlich ist, dass die Motorelektronik mit Daten versorgt wird, die den real auftretenden Schlupf korrekt wiedergeben, wobei insbesondere die höherfrequenten Anteile der Schwankungen des Schlupfs, die durch Schlupfregelungsprogramme verursacht werden, abgebildet sind. Das Drehzahlsignal kann dabei korrigiert oder unkorrigiert sein, je nachdem in welcher Weise die übrigen Daten, wie die Fahrzeuggeschwindigkeit, eingegeben werden.

Da der Schlupf primär durch die höherfrequenten Anteile Phänomene verursacht, die auf einem Prüfstand mit herkömmlichen Mitteln nicht abgebildet werden können, ist es in einer bevorzugten Ausführungsvariante der Erfindung vorgesehen, dass der Korrekturwert primär von kurzfristigen Schwankungen des Schlupfs abhängt.

In einer Variante der Erfindung ist es in vorteilhafter Weise möglich, dass durch einen positiven Korrekturwert ein Schlupf durch Beschleunigen und durch einen negativen Korrekturwert ein Schlupf durch Verzögern bzw. Blockieren der angetriebenen Räder abgebildet wird. Weiters ist es begünstigt, wenn der seitliche Schlupf durch ein weiteres Simulationsmodell berücksichtigt bzw. korrigiert wird. Damit kann auch ein Übersteuern oder Untersteuern des Fahrzeugs passend abgebildet werden.

Eine weitere Steigerung der Genauigkeit kann erreicht werden, wenn Neigungen der Fahrzeugkarosserie berücksichtigt werden. Die durch Gieren oder Nicken verursachten Änderungen der Aufstandskräfte gehen so in die Berechnungsmodelle passend ein.

Schlupfregelungsprogramme berechnen den Schlupf üblicherweise aus einer Drehzahldifferenz zwischen den Vorderrädern und den Hinterrädern eines Fahrzeugs, wobei eine Korrektur auf der Basis des Lenkwinkels durchgeführt wird, um die unterschiedliche Laufstrecke zu berücksichtigen. Im Rennsport wird jedoch bisweilen der Schlupf aus der Drehzahl der nicht angetriebenen Räder berechnet, der eine fiktive Drehzahl gegenübergestellt wird, die aus der Motordrehzahl und den Übersetzungsverhältnissen im Antriebsstrang bestimmt wird. Auf diese Weise ist es möglich, Schlupfbegrenzungsprogramme zu realisieren, die ein schnelleres Ansprechverhalten aufweisen. Bei solchen Schlupfbegrenzungsprogrammen ist es vorteilhaft, wenn eine von dem Simulationsmodell berechnete Drehzahl nicht angetriebener Räder des Fahrzeugs durch einen weiteren Korrekturwert verändert wird, der vom Schlupf abhängt. Dadurch kann eine korrekte Funktion der Schlupfbegrenzungsprogramme auch am Prüfstand sichergestellt werden.

Weiters ist es möglich, dass die vom Simulationsmodell berechnete Drehzahl oder auch der vom Simulationsmodell berechnete Schlupf zur elektronischen Fahrzeugsteuerung bzw. zur elektronischen Motorsteuerung (ECU) verwendet wird.

In der Folge wird die Erfindung anhand der in den Figuren dargestellten Ausführungsvarianten näher erläutert. Die Fig. zeigen:

In Fig. 1 ist der allgemeine Aufbau eines Prüfstandes dargestellt.

In Fig. 2 sind die wesentlichen Teile eines zu simulierenden Fahrzeugs in Form eines Blockdiagramms dargestellt, das auch den verwendeten Modellen zu Grunde liegt.

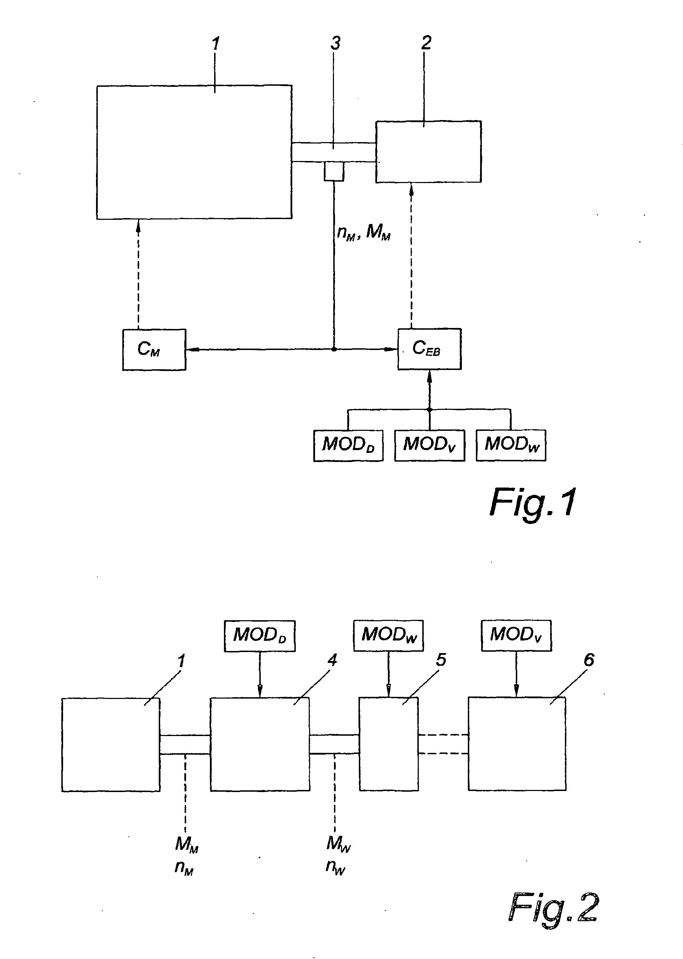

Die Fig. 1 zeigt den typischen Prüfstandsaufbau, bei dem eine Brennkraftmaschine 1 mit einer elektrischen Bremsvorrichtung 2 über eine Welle 3 verbunden ist. An der Welle können gemessen werden:

- $M_M$ Motormoment an der Motorabtriebswelle

- $n_M$ Drehzahl des Motors an der Abtriebswelle

Für die Berechnungen wird selbstverständlich auch die Winkelbeschleunigung verwendet, da sich diese aber direkt aus der zeitlichen Ableitung der Winkelgeschwindigkeit ergibt, die der Drehzahl proportional ist, wird dies in der Folge nicht extra erwähnt.

Die Brennkraftmaschine 1 wird durch eine Motorsteuerung $C_M$ gesteuert und die elektrische Bremse 2 wird durch eine Bremssteuerung $C_{EB}$ gesteuert. In der Bremssteuerung $C_{EB}$ werden dabei das Antriebsstrangsmodell $MOD_D$, das Fahrzeugmodell $MOD_V$ und das Radmodell $MOD_W$ in geeigneter Weise verknüpft.

In Fig. 2 werden in Form eines Blockdiagramms die wesentlichen Komponenten eines zu simulierenden Fahrzeugs dargestellt. Die Brennkraftmaschine 1 treibt über einen Antriebsstrang 4 Antriebsräder 5 an, die über den Kontakt mit der Fahrbahnoberfläche das Verhalten des Fahrzeugs 6 beeinflussen. Für die Berechnung sind neben dem oben erwähnten Motormoment $M_M$ und der Motordrehzahl $n_M$ folgende Variable wesentlich:

$M_w$... Antriebsrad-Moment

$n_w$... Antriebsrad-Drehzahl

$v_v$... Fahrzeuggeschwindigkeit

In dem Antriebsstrangmodell $MOD_D$ werden die Variablen $M_w$, $n_w$, $M_M$, $n_M$ durch eine erste Funktion verknüpft. In die Funktion gehen Parameter ein, die die Massen, Elastizitäten und Dämpfungen des Antriebsstranges und die Getriebeübersetzung des jeweiligen Ganges abbilden.

Das Fahrzeugmodell $MOD_V$ bestimmt das am Antriebsrad wirkende Moment $M_w$ als Funktion der Fahrzeuggeschwindigkeit und des Schlupfes.

Das Fahrzeugmodell $MOD_V$ bildet im Wesentlichen das Verhalten des Fahrzeugs zufolge von Luftwiderstand, Rollwiderstand und der Trägheit des Fahrzeugs bei Geschwindigkeitsänderungen ab.

Das Antriebsradmodell $MOD_W$ dient dazu, den Schlupf zu berechnen, wobei in diese Funktion primär die Fahrzeuggeschwindigkeit $v_v$ und das Antriebsradmoment $M_w$ eingehen. In realen Modellen können zusätzliche Parameter und Variable verwendet werden, um die Genauigkeit entsprechend zu erhöhen. So hängt beispielsweise der Schlupf an den Antriebsrädern wesentlich von der Reifentemperatur ab, die wiederum unter anderem eine Folge des Schlupfs zu früheren Zeitpunkten ist.

In einer ersten Ausführungsvariante der Erfindung wird in dem Fahrzeugmodell $MOD_V$ die Gleichung (3) für die Berechnung der Fahrzeuggeschwindigkeit aus der Antriebsradwinkelgeschwindigkeit $\omega_w$ verwendet, die den Schlupf vernachlässigt.

$$v_v^* = U_w \cdot n_w \qquad\qquad (3)$$

Dabei stellt $V_v^*$ eine virtuelle, d.h. bewusst verfälschte Fahrzeuggeschwindigkeit dar. Für die Motorsteuerung $C_M$ wird jedoch die Fahrzeuggeschwindigkeit v korrekt unter Berücksichtigung des Schlupfs S gemäß Gleichung (4) berechnet.

$$v_v = (1 - S) \cdot U_w \cdot n_w \qquad\qquad (4)$$

Überraschenderweise hat sich herausgestellt, dass auf diese Weise die Schwingungen des Systems durch die Schlupfregelung in sehr guter Näherung abgebildet werden können. Wesentlich dabei ist, dass besonders die Schwingungsfrequenzen bei passender Wahl sämtlicher Parameter weitgehend mit den real auftretenden Schwingungsfrequenzen übereinstimmen. Lediglich die Schwingungsamplituden sind unter Umständen etwas kleiner als am realen Fahrzeug. Wie beim vereinfachten Modell des Standes der Technik wird die Fahrzeuggeschwindigkeit nicht vollständig richtig abgebildet, wodurch sich geringfügige Fehler ergeben. Die kann durch geeignete Parameteranpassung im Zuge einer Kalibrierung des Modells weitgehend ausgeglichen werden.

In verallgemeinerter Form kann die virtuelle Fahrzeuggeschwindigkeit $V_v^*$ in folgender Form dargestellt werden:

$$v_v^* = v_v \cdot k \qquad\qquad (5)$$

wobei der Korrekturwert k = 1 / (1 - S) oder in anderer passender Form als Funktion vom Schlupf S gewählt werden kann.

In einer weiteren Ausführungsvariante der Erfindung können auch die durch die partielle Vernachlässigung des Schlupfs auftretende Fehler weitgehend ausgeschlossen werden. Dabei wird in dem Fahrzeugmodell $MOD_v$ die Gleichung (6) für die Berechnung der Fahrzeuggeschwindigkeit $v_v$ eingesetzt.

$$v_v^* = (1 - S_{Int}) \cdot U_w \cdot n_w \qquad\qquad (6)$$

Anstelle des aktuellen Schlupfs S wird dabei ein Wert $S_{int}$ verwendet, der sich durch Integration der Werte des Schlupfs S über einen gewissen Zeitraum ergibt. Für das Fahrzeugmodell wird daher ein Wert für den Schlupf verwendet, der geglättet ist und den Prüfstand daher nicht zu Schwingungen anregt, die durch die Masse der elektrischen Bremse bedingt sind und in der Realität keine Entsprechung haben. Für die Motorsteuerung $C_M$ wird mit Gleichung (4) wie oben verwendet.

Die vorliegende Erfindung ermöglicht es, auch transiente Phänomene wie etwa hochfrequente Schwankungen in der Raddrehzahl, die durch Schlupfregelungsprogramme bedingt sind, auf einem Prüfstand abzubilden, der nicht ausreichend dynamisch ist, solchen Schwingungen tatsächlich zu folgen.

**Patentansprüche**

1.  Verfahren zur Simulation des Fahrverhaltens von Fahrzeugen auf einem Prüfstand, bei dem der Motor des Fahrzeugs auf dem Prüfstand an eine elektronisch steuerbare Bremsvorrichtung (2) angekoppelt wird und ein Simulationsmodell Simulationswerte von Variablen berechnet, die den Fahrzustand des Fahrzeugs darstellen, indem die Reaktion des Fahrzeugs auf das Verhalten des Motors und die unmittelbar zuvor bestimmten Werte der Variablen berechnet wird, wobei als Variable zumindest die Fahrzeuggeschwindigkeit ($v_v$, $v_v^*$) und der an den Antriebsrädern auftretende Schlupf (S) berechnet werden und wobei zur Steuerung der Bremsvorrichtung (2) eine vom Simulationsmodell berechnete Fahrzeuggeschwindigkeit herangezogen wird, **dadurch gekennzeichnet, dass** das Simulationsmodell zwei unterschiedliche Fahrzeuggeschwindigketten berechnete, nämlich eine erste Fahrzeuggeschwindigkelt ($v_v$) unter korrekter Berücksichtigung des Schlupfes (S) und eine virtuelle Fahrzeuggeschwindigkeit ($v_v^*$), die um einen vom Schlupf abhängigen Korrekturwert (k) gegenüber der ersten Fahrzeuggeschwindigkeit ($v_v$) verändert ist und dass die eine Schlupfregelung umfassende Motorsteuerung ($C_M$) mit der ersten Fahrzeuggeschwindigkeit ($v_v$) angesteuert wird, während zur Steuerung der Bremsvorrichtung (2, $C_{EB}$) die virtuelle Fahrzeuggeschwindigkeit ($v_v^*$)

herangezogen wird.

**2.** Verfahren nach Anspruch 1, **dadurch gekennzeichnet, dass** der Korrekturwert primär aus der von kurzfristigen Schwankungen des Schlupfs (S) berechnet wird.

**3.** Verfahren nach Anspruch 1 oder 2, **dadurch gekennzeichnet, dass** eine von dem Simulationsmodell berechnete Drehzahl nicht angetriebener Räder des Fahrzeugs durch einen weiteren Korrekturwert verändert wird, der vom Schlupf abhängt.

**4.** Verfahren nach einem der Ansprüche 1 bis 3, **dadurch gekennzeichnet, dass** durch einen positiven Korrekturwert ein Schlupf (S) durch Beschleunigen und durch einen negativen Korrekturwert ein Schlupf (S) durch Verzögern bzw. Blockieren der angetriebenen Räder abgebildet wird.

**5.** Verfahren nach einem der Ansprüche 1 bis 4, **dadurch gekennzeichnet, dass** der seitliche Schlupf (S) durch ein weiteres Simulationsmodell berücksichtigt bzw. korrigiert wird.

**6.** Verfahren nach einem der Ansprüche 1 bis 5, **dadurch gekennzeichnet, dass** in die Berechnungen Neigungen der Fahrzeugkarosserie eingehen.

**7.** Verfahren nach einem der Ansprüche 1 bis 6, **dadurch gekennzeichnet, dass** die vom Simulationsmodell berechnete Drehzahl oder der vom Simulationsmodell berechnete Schlupf (S) zur elektronischen Fahrzeugsteuerung bzw. zur elektronischen Motorsteuerung verwendet wird.

**Claims**

**1.** A method for simulating the driving behavior of vehicles on a test stand, in which the engine of the vehicle is coupled on the test stand to an electronically controllable braking apparatus (2) and a simulation model calculates simulation values of variables which are representative of the driving state of the vehicle in that the reaction of the vehicle to the behavior of the engine and the values of the variables as determined immediately prior thereto are calculated, with at least the vehicle speed ($v_v$, $v_v^*$) and the slip (S) occurring on the drive wheels being calculated as variables and with a vehicle speed calculated by the simulation model being used for controlling the braking apparatus (2), **characterised in that** the simulation model calculates two different vehicle speeds, which is a first vehicle speed ($v_v$) under correct consideration of the slip (S) and a virtual vehicle speed ($v_v^*$) which is changed by a corrective value (k) dependent on the slip in relation to the first vehicle speed ($v_v$), and that the engine control ($C_M$) comprising a slip control is triggered with the first vehicle speed ($v_v$), whereas the virtual vehicle speed ($v_v^*$) is used for controlling the braking apparatus (2, $C_{EB}$).

**2.** A method according to claim 1, **characterised in that** the corrective value is primarily calculated from short-term fluctuations of the slip (S).

**3.** A method according to claim 1 or 2, **characterised in that** a speed of nondriven wheels of the vehicle as calculated by the simulation model is changed by a further corrective value which depends on the slip.

**4.** A method according to one of the claims 1 to 3, **characterised in that** a slip (S) by acceleration is reflected by a positive corrective value and a slip (S) by retardation or blocking of the driven wheels is reflected by a negative corrective value.

**5.** A method according to one of the claims 1 to 4, **characterised in that** the lateral slip (S) is considered or corrected by a further simulation model.

**6.** A method according to one of the claims 1 to 5, **characterised in that** inclinations of the vehicle chassis are included in the calculations.

**7.** A method according to one of the claims 1 to 6, **characterised in that** the speed calculated by the simulation model or the slip (S) calculated by simulation model is used for electronic vehicle control or for electronic engine control.

**Revendications**

1. Procédé de simulation du comportement routier d'un véhicule sur un banc d'essai selon lequel sur le banc d'essai on couple le moteur du véhicule à un dispositif de freins (2) à commande électronique, et

   un modèle de simulation calcule des valeurs de simulation avec des variables représentant l'état routier du véhicule en calculant la réaction du véhicule selon le comportement du moteur et des valeurs des variables qui ont été déterminées directement au préalable,

   &ast; comme variables, on calcule au moins la vitesse du véhicule ($V_v$, $V_v$*) et le patinage (S) des roues motrices, et
   &ast; pour commander le dispositif de freins (2), on utilise la vitesse du véhicule calculée par le modèle de simulation,

   procédé **caractérisé en ce que**

   &ast; le modèle de simulation calcule deux vitesses différentes du véhicule, à savoir une première vitesse du véhicule ($V_v$) en prenant en compte correctement le patinage (S) et une vitesse virtuelle du véhicule ($V_v$*) qui a été modifiée par rapport à la première vitesse du véhicule ($V_v$) par une valeur de correction (k) dépendant du patinage, et
   &ast; la commande de moteur (Cm) comprenant la régulation antipatinage étant commandé par la première vitesse ($V_v$) du véhicule alors que pour commander le dispositif de freins (2, $C_{EB}$), on utilise la vitesse virtuelle ($V_v$*) du véhicule.

2. Procédé selon la revendication 1,
   **caractérisé en ce que**
   l'on calcule la valeur de correction principalement à partir des variations à court terme du patinage (S).

3. Procédé selon la revendication 1 ou 2,
   **caractérisé en ce que**
   l'on modifie par une autre valeur de correction dépendant du patinage, la vitesse de rotation des roues non motrices du véhicule, vitesse calculée par le modèle de simulation.

4. Procédé selon l'une des revendications 1 à 3,
   **caractérisé en ce que**
   avec une valeur de correction positive, on simule le patinage (S) par des accélérations et avec une valeur de correction négative, on simule le patinage (S) par des décélérations ou le blocage des roues motrices.

5. Procédé selon l'une des revendications 1 à 4,
   **caractérisé en ce que**
   l'on tient compte ou on corrige le patinage latéral (S) par un autre modèle de simulation.

6. Procédé selon l'une des revendications 1 à 5,
   **caractérisé en ce que**
   les calculs tiennent compte de l'inclinaison de la carrosserie du véhicule.

7. Procédé selon l'une des revendications 1 à 6,
   **caractérisé en ce que**
   pour la commande électronique du véhicule ou la gestion électronique du moteur on utilise la vitesse de rotation calculée à partir du modèle de simulation ou le patinage (S) calculé à partir du modèle de simulation.

$n_M, M_M$

$C_M$

$C_{EB}$

$MOD_D$  $MOD_V$  $MOD_W$

*Fig.1*

$MOD_D$   $MOD_W$   $MOD_V$

$M_M$
$n_M$

$M_W$
$n_W$

*Fig.2*

**IN DER BESCHREIBUNG AUFGEFÜHRTE DOKUMENTE**

**In der Beschreibung aufgeführte Patentdokumente**

- EP 1048944 A